# EUROPÄISCHE PATENTSCHRIFT

(11) **EP 3 093 905 B1**
(45) Veröffentlichungstag und Bekanntmachung des Hinweises auf die Patenterteilung: **04.05.2022**
(21) Anmeldenummer: 15167885.1
(22) Anmeldetag: 15.05.2015
(51) Int. Cl.: H01M 10/42, H01M 50/431, H01M 50/457, H01M 50/572

(54) **BATTERIEZELLE UND VERFAHREN ZUR STEUERUNG EINES IONENFLUSSES INNERHALB DER BATTERIEZELLE**
BATTERY CELL AND METHOD FOR CONTROLLING ION FLUX WITHIN THE BATTERY CELL
ÉLÉMENT DE BATTERIE ET PROCÉDÉ DE COMMANDE D'UN FLUX IONIQUE DANS UN ÉLÉMENT DE BATTERIE

(43) Veröffentlichungstag der Anmeldung: 16.11.2016
(73) Patentinhaber: Robert Bosch GmbH, 70442 Stuttgart (DE); GS Yuasa International Ltd., Kisshoin, Minami-ku, Kyoto-shi, Kyoto 601-8520 (JP)
(72) Erfinder: Sebastian, Georg, 71672 Marbach A.N. (DE); Wurm, Calin Iulius, 86405 Meitingen (DE)
(74) Vertreter: Isarpatent

(56) Entgegenhaltungen:
- WO-A1-2011/070712
- CN-A- 104 103 791
- JP-A- 2003 217 553
- US-A1- 2014 329 120
- US-A1- 2015 004 450

## Beschreibung

Die vorliegende Erfindung betrifft eine Batteriezelle gemäß dem Oberbegriff des Anspruchs 1, wie aus der JP 2003 217 553 A oder der US 2014/329120 bekannt.

### Stand der Technik

Elektrische Energie ist mittels Batterien speicherbar. Batterien wandeln chemische Reaktionsenergie in elektrische Energie um. Hierbei werden Primärbatterien und Sekundärbatterien unterschieden. Primärbatterien sind nur einmal funktionsfähig, während Sekundärbatterien, die auch als Akkumulator bezeichnet werden, wieder aufladbar sind. Eine Batterie umfasst dabei eine oder mehrere Batteriezellen.

In einem Akkumulator finden insbesondere sogenannte Lithium-Ionen-Batteriezellen Verwendung. Diese zeichnen sich unter anderem durch hohe Energiedichten, thermische Stabilität und eine äußerst geringe Selbstentladung aus. Lithium-Ionen-Batteriezellen kommen unter anderem in Kraftfahrzeugen, insbesondere in Elektrofahrzeugen (Electric Vehicle, EV), Hybridfahrzeugen (Hybride Electric Vehicle, HEV) sowie Plug-In-Hybridfahrzeugen (Plug-In-Hybride Electric Vehicle, PHEV) zum Einsatz.

Lithium-Ionen-Batteriezellen weisen eine positive Elektrode, die auch als Kathode bezeichnet wird, und eine negative Elektrode, die auch als Anode bezeichnet wird, auf. Die Kathode sowie die Anode umfassen je einen Stromableiter, auf den ein Aktivmaterial aufgebracht ist. Bei dem Aktivmaterial für die Kathode handelt es sich beispielsweise um ein Metalloxid. Bei dem Aktivmaterial für die Anode handelt es sich beispielsweise um Graphit oder Silizium.

In das Aktivmaterial der Anode sind Lithiumatome eingelagert. Beim Betrieb der Batteriezelle, also bei einem Entladevorgang, fließen Elektronen in einem äußeren Stromkreis von der Anode zur Kathode. Innerhalb der Batteriezelle wandern Lithiumionen bei einem Entladevorgang von der Anode zur Kathode. Dabei lagern die Lithiumionen aus dem Aktivmaterial der Anode reversibel aus, was auch als Deinterkalation bezeichnet wird. Bei einem Ladevorgang der Batteriezelle wandern die Lithiumionen von der Kathode zu der Anode. Dabei lagern die Lithiumionen wieder in das Aktivmaterial der Anode reversibel ein, was auch als Interkalation bezeichnet wird.

Die Elektroden der Batteriezelle sind folienartig ausgebildet und unter Zwischenlage eines Separators, welcher die Anode von der Kathode trennt, zu einem Elektrodenwickel gewunden. Ein solcher Elektrodenwickel wird auch als Jelly-Roll bezeichnet. Die beiden Elektroden des Elektrodenwickels werden mittels Kollektoren elektrisch mit Polen der Batteriezelle, welche auch als Terminals bezeichnet werden, verbunden. Eine Batteriezelle umfasst in der Regel eine oder mehrere Elektrodeneinheiten. Die Elektroden und der Separator sind von einem in der Regel flüssigen Elektrolyt umgeben. Der Elektrolyt ist für die Lithiumionen leitfähig und ermöglicht den Transport der Lithiumionen zwischen den Elektroden.

In einem Fehlerfall, beispielsweise bei einem Kurzschluss oder einer Überladung, kann es zu einem Temperaturanstieg in der Batteriezelle kommen. Bei ausreichend hoher Temperatur können ein Zerfall des Elektrolyten sowie eine Schrumpfung des Separators einsetzen. In der Folge kann es zu einer Zerstörung der Batteriezelle, eventuell in Form einer Explosion, kommen.

Eine Batteriezelle ist in der DE 10 2012 217 451 A1 offenbart. Die Batteriezelle weist ein Zellengehäuse auf, welches beispielsweise aus einem Metall gefertigt ist. Das Zellengehäuse ist prismatisch, insbesondere quaderförmig, ausgestaltet und druckfest ausgebildet. Die Batteriezelle umfasst eine Membran, welche sich bei einem Überdruck innerhalb des Zellengehäuses verformt und dabei einen Kurzschluss auslöst.

Aus der US 2013/0017432 A1 ist ein Separator für Batteriezellen bekannt. Der Separator ist dabei mehrlagig aufgebaut, wobei einzelne Lagen Muster mit zueinander versetzt, insbesondere komplementär, angeordneten Öffnungen aufweisen.

In der US 2005/0208383 A1 ist ein Separator offenbart, welcher ein poröses Basismaterial aufweist, auf dem einseitig oder beidseitig eine Harzstruktur vorgesehen ist.

### Offenbarung der Erfindung

Es wird eine Batteriezelle vorgeschlagen, wie in Anspruch 1 definiert.

Die ionisch durchlässige Randschicht ist beispielsweise ein Polymer oder eine Keramik. Auch andere Materialien sind denkbar. Die Kernschicht ist vorzugsweise metallisch ausgebildet. Aber auch andere elektrisch leitfähige Materialien, insbesondere Graphit, sind denkbar.

Vorzugsweise ist die elektrisch leitfähige Kernschicht zwischen einer ersten ionisch durchlässigen Randschicht und einer zweiten ionisch durchlässigen Randschicht eingebettet. Die beiden Randschichten umgeben also die Kernschicht beidseitig.

Gemäß der Erfindung ist die elektrisch leitfähige Kernschicht als geschäumte Metallfolie ausgebildet. Die Metallfolie weist somit eine Porosität auf und ist damit für Lithiumionen durchlässig. Somit ist der Separator ionisch durchlässig.

Ferner wird ein Verfahren zur Steuerung eines Ionenflusses innerhalb einer erfindungsgemäßen Batteriezelle vorgeschlagen. Dabei wird eine elektrische Verbindung zwischen der elektrisch leitfähigen Kernschicht des Separators und einem Stromableiter der Anode oder zwischen der elektrisch leitfähigen Kernschicht des Separators und einem Stromableiter der Kathode hergestellt. Eine derartige elektrische Beschaltung der Elektrodeneinheit der Batteriezelle ermöglicht eine Steuerung eines elektrischen Feldes zwischen der Anode und der Kathode sowie eine Steuerung des Ionenflusses zwischen der Anode und der Kathode.

Gemäß einer vorteilhaften Ausgestaltung der Erfindung werden die elektrisch leitfähige Kernschicht des Separators und der Stromableiter der Kathode kurzgeschlossen. Somit liegen die Kernschicht des Separators und der Stromableiter der Kathode elektrisch auf dem gleichen Potential. Somit existiert kein elektrisches Feld zwischen der Kernschicht des Separators und dem Stromableiter der Kathode. Dadurch ist kein lonenfluss zwischen Separator und Kathode möglich. Damit ist auch kein lonenfluss zwischen Anode und Separator möglich.

Gemäß einer anderen vorteilhaften Ausgestaltung der Erfindung werden die elektrisch leitfähige Kernschicht des Separators und der Stromableiter der Anode kurzgeschlossen. Somit liegen die Kernschicht des Separators und der Stromableiter der Anode elektrisch auf dem gleichen Potential. Somit existiert kein elektrisches Feld zwischen der Kernschicht des Separators und dem Stromableiter der Anode. Dadurch ist kein lonenfluss zwischen Separator und Anode möglich. Damit ist auch kein lonenfluss zwischen Kathode und Separator möglich.

Gemäß einer vorteilhaften Weiterbildung der Erfindung wird zwischen die elektrisch leitfähige Kernschicht des Separators und den Stromableiter der Kathode eine Spannungsquelle, insbesondere eine Gleichspannungsquelle, geschaltet. Insbesondere wird dabei ein Pluspol der Gleichspannungsquelle mit der Kernschicht des Separators verbunden, und ein Minuspol der Gleichspannungsquelle wird mit dem Stromableiter der Kathode verbunden. Somit liegt die Kernschicht des Separators elektrisch auf höherem Potential als der Stromableiter der Kathode. Ebenso liegt die Kernschicht des Separators elektrisch auf höherem Potential als der Stromableiter der Anode. Somit existiert ein elektrisches Feld zwischen der Kernschicht des Separators und dem Stromableiter der Kathode, und es existiert ein elektrisches Feld zwischen der Kernschicht des Separators und dem Stromableiter der Anode. Dadurch erfolgt zunächst ein lonenfluss von dem Separator zu der Kathode sowie von dem Separator zu der Anode. Nachdem ein Gleichgewicht innerhalb der Elektrodeneinheit hergestellt ist, endet der lonenfluss.

Gemäß einer anderen vorteilhaften Weiterbildung der Erfindung wird zwischen die elektrisch leitfähige Kernschicht des Separators und den Stromableiter der Anode eine Spannungsquelle, insbesondere eine Gleichspannungsquelle, geschaltet. Insbesondere wird dabei ein Minuspol der Gleichspannungsquelle mit der Kernschicht des Separators verbunden, und ein Pluspol der Gleichspannungsquelle wird mit dem Stromableiter der Anode verbunden. Somit liegt die Kernschicht des Separators elektrisch auf tieferem Potential als der Stromableiter der Anode. Ebenso liegt die Kernschicht des Separators elektrisch auf tieferem Potential als der Stromableiter der Kathode. Somit existiert ein elektrisches Feld zwischen dem Stromableiter der Anode und der Kernschicht des Separators, und es existiert ein elektrisches Feld zwischen dem Stromableiter der Kathode und der Kernschicht des Separators. Dadurch erfolgt zunächst ein lonenfluss von der Anode zu dem Separator zu sowie von der Kathode zu dem Separator. Nachdem ein Gleichgewicht innerhalb der Elektrodeneinheit hergestellt ist, endet der lonenfluss.

Eine erfindungsgemäße Batteriezelle findet vorteilhaft Verwendung in einem Elektrofahrzeug (EV), in einem Hybridfahrzeug (HEV) oder in einem Plug-In-Hybridfahrzeug (PHEV). Auch eine Verwendung in einer stationären Batterie, in einem Luftfahrzeug oder in einer Batterie in einer marinen Anwendung ist denkbar.

Das erfindungsgemäße Verfahren findet vorteilhaft Verwendung in einer Batteriezelle eines Elektrofahrzeugs (EV), eines Hybridfahrzeugs (HEV) oder eines Plug-In-Hybridfahrzeugs (PHEV). Auch eine Verwendung in einer stationären Batterie oder in einer Batterie in einer marinen Anwendung ist denkbar.

### Vorteile der Erfindung

Das erfindungsgemäße Verfahren gestattet, einen lonenfluss innerhalb der Elektrodeneinheit der Batteriezelle verhältnismäßig schnell zu unterbinden. Dadurch können auch keine Elektronen in einem äußeren Stromkreis von der Anode zur Kathode fließen. Durch Beendigung des Stromflusses werden eine Kettenreaktion sowie eine weitere Zerstörung der Batteriezelle verhindert, beziehungsweise ausgeschlossen.

### Kurze Beschreibung der Zeichnungen

Ausführungsformen der Erfindung werden anhand der Zeichnungen und der nachfolgenden Beschreibung näher erläutert.

Es zeigen:
- Figur 1:: eine Explosionsdarstellung einer erfindungsgemäßen Batteriezelle,
- Figur 2:: eine schematische Darstellung einer Elektrodeneinheit der Batteriezelle aus Figur 1,
- Figur 3:: eine schematische Darstellung der Elektrodeneinheit aus Figur 2 mit einer ersten Beschaltung zur Steuerung des lonenflusses und
- Figur 4:: eine schematische Darstellung der Elektrodeneinheit aus Figur 2 mit einer zweiten Beschaltung zur Steuerung des lonenflusses.

### Ausführungsformen der Erfindung

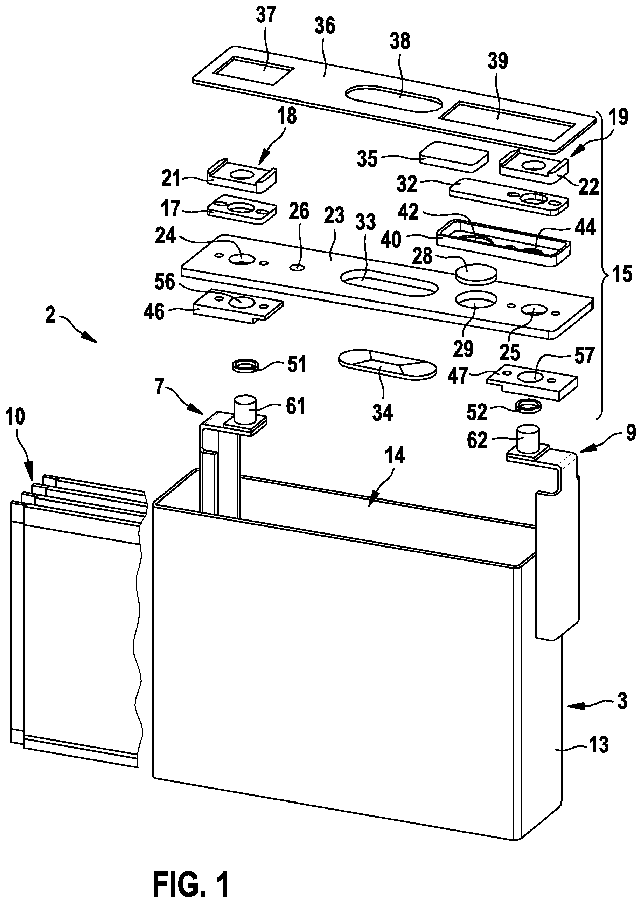

In Figur 1 ist eine Batteriezelle 2 in Explosionsdarstellung gezeigt. Die Batteriezelle 2 umfasst ein Zellengehäuse 3, welches prismatisch, vorliegend quaderförmig, ausgebildet ist. Das Zellengehäuse 3 ist vorliegend elektrisch leitend ausgeführt und beispielsweise aus Aluminium gefertigt. Das Zellengehäuse 3 umfasst einen quaderförmigen Behälter 13, welcher an einer Seite eine Behälteröffnung 14 aufweist. Die Behälteröffnung 14 wird durch eine Deckelanordnung 15 verschlossen, welche unter anderem eine Deckplatte 23 umfasst, die vorliegend ebenfalls elektrisch leitend ausgeführt und beispielsweise aus Aluminium gefertigt ist.

Der quaderförmigen Behälter 13 und die Deckplatte 23 des Zellengehäuses 3 sind dabei elektrisch und mechanisch miteinander verbunden, insbesondere verschweißt. Auch andere Formen des Zellengehäuses 3, beispielsweise zylindrisch, insbesondere kreiszylindrisch, sind denkbar.

Die Batteriezelle 2 umfasst ein negatives Terminal 21 und ein positives Terminal 22. Über die Terminals 21, 22 kann eine von der Batteriezelle 2 zur Verfügung gestellte Spannung abgegriffen werden. Ferner kann die Batteriezelle 2 über die Terminals 21, 22 auch geladen werden. Die Terminals 21, 22 sind beabstandet voneinander auf der Deckplatte 23 des prismatischen Zellengehäuses 3 angeordnet.

Innerhalb des Zellengehäuses 3 der Batteriezelle 2 ist eine Elektrodeneinheit 10 angeordnet, welche zwei Elektroden, nämlich eine Anode 82 und eine Kathode 84, aufweist. Es ist auch denkbar, dass mehrere Elektrodeneinheiten 10 in dem Zellengehäuse 3 vorgesehen sind. Das Zellengehäuse 3 der Batteriezelle 2 ist mit einem flüssigen Elektrolyt gefüllt, der die Elektrodeneinheit 10 umgibt. Der Elektrolyt wird nach dem Zusammenbau des Zellengehäuses 3 durch eine Einfüllöffnung 26 in der Deckplatte 23 in das Zellengehäuse 3 eingefüllt. Danach wird die Einfüllöffnung 26 mittels eines nicht dargestellten Dichtstopfens verschlossen.

Die Anode 82 umfasst einen Stromableiter 81, der auf einer ersten Schmalseite über einen Rand der Elektrodeneinheit 10 übersteht und mit einem ersten Kollektor 7 verbunden ist. Über den ersten Kollektor 7 ist der Stromableiter 81 der Anode 82 elektrisch mit dem negativen Terminal 21 der Batteriezelle 2 verbunden.

Die Kathode 84 umfasst einen Stromableiter 85, der auf einer zweiten Schmalseite, welche der ersten Schmalseite gegenüber liegt, über einen Rand der Elektrodeneinheit 10 übersteht und mit einem zweiten Kollektor 9 verbunden ist. Über den zweiten Kollektor 9 ist der Stromableiter 85 der Kathode 84 elektrisch mit dem positiven Terminal 22 der Batteriezelle 2 verbunden.

Der erste Kollektor 7, welcher sich innerhalb des Zellengehäuses 3 befindet, ist mittels einer ersten Kontaktanordnung 18 mit dem negativen Terminal 21 verbunden, welches sich außerhalb des Zellengehäuses 3 befindet. Der zweite Kollektor 9, welcher sich innerhalb des Zellengehäuses 3 befindet, ist mittels einer zweiten Kontaktanordnung 19 mit dem positiven Terminal 22 verbunden, welches sich außerhalb des Zellengehäuses 3 befindet.

Der erste Kollektor 7 ist mit einem ersten Anschlussbolzen 61 verbunden, welcher auf einer der Elektrodeneinheit 10 abgewandten Seite von dem ersten Kollektor 7 weg ragt. Der erste Anschlussbolzen 61 durchragt dabei eine erste Decköffnung 24 in der Deckplatte 23 der Deckelanordnung 15 und ist an seinem dem ersten Kollektor 7 abgewandten Ende mit dem negativen Terminal 21 verbunden.

Der zweite Kollektor 9 ist mit einem zweiten Anschlussbolzen 62 verbunden, welcher auf einer der Elektrodeneinheit 10 abgewandten Seite von dem zweiten Kollektor 9 weg ragt. Der zweite Anschlussbolzen 62 durchragt dabei eine zweite Decköffnung 25 in der Deckplatte 23 der Deckelanordnung 15 und ist an seinem dem zweiten Kollektor 9 abgewandten Ende mit dem positiven Terminal 22 verbunden.

Die Deckelanordnung 15 umfasst vorliegend eine Potentialplatte 17, welche elektrisch leitfähig ausgeführt ist, und welche zwischen der Deckplatte 23 und dem negativen Terminal 21 angeordnet ist. Die Potentialplatte 17 verbindet die Deckplatte 23 elektrisch mit dem negativen Terminal 21. Somit liegt das Zellengehäuse 3 auf dem gleichen elektrischen Potential wie das negative Terminal 21.

Anstelle der Potentialplatte 17 kann auch eine Isolation vorgesehen sein, welche die Deckplatte 23 elektrisch von dem negativen Terminal 21 isoliert. In diesem Fall können das Zellengehäuse 3 und das negative Terminal 21 auf verschiedenen elektrischen Potentialen liegen.

Die Deckelanordnung 15 umfasst ferner eine Verbindungsplatte 32, welche ebenfalls elektrisch leitfähig ausgeführt ist, und welche zwischen der Deckplatte 23 und dem positiven Terminal 22 angeordnet ist. Die Verbindungsplatte 32 ist elektrisch mit dem positiven Terminal 22 verbunden. Auf der der Deckplatte 23 abgewandten Seite der Verbindungsplatte 32, seitlich neben dem positiven Terminal 22, ist ferner eine Verbindungsplattenisolierung 35 angebracht, vorliegend aufgeklebt.

Zwischen der Deckplatte 23 und der Verbindungsplatte 32 ist ein Abstandsisolator 40 vorgesehen, welcher die Deckplatte 23 elektrisch von der Verbindungsplatte 32 und dem positiven Terminal 22 isoliert. Der Abstandsisolator 40 weist eine Durchgriffsöffnung 44 auf, welche von dem zweiten Anschlussbolzen 62 durchragt wird.

Die Deckelanordnung 15 umfasst auch eine Deckenplattenisolierfolie 36, welche auf der dem Behälter 13 abgewandten Seite der Deckplatte 23 aufgeklebt ist. Die Deckenplattenisolierfolie 36 weist eine erste Folienöffnung 37 auf, welche von dem negativen Terminal 21 und der Potentialplatte 17 durchragt wird. Die Deckenplattenisolierfolie 36 weist auch eine zweite Folienöffnung 38 auf, auf deren Funktion später eingegangen wird. Die Deckenplattenisolierfolie 36 weist auch eine dritte Folienöffnung 39 auf, welche von dem positiven Terminal 22, der Verbindungsplatte 32, der Verbindungsplattenisolierung 35 und dem Abstandsisolator 40 durchragt wird.

Zwischen der Deckplatte 23 und dem ersten Kollektor 7 ist ein erster Anschlussisolator 46 vorgesehen, welcher die Deckplatte 23 elektrisch von dem ersten Kollektor 7 isoliert. Der erste Anschlussisolator 46 weist eine erste Isolatoröffnung 56 auf, welche der erste Anschlussbolzen 61 durchgreift.

Zwischen der Deckplatte 23 und dem zweiten Kollektor 9 ist ein zweiter Anschlussisolator 47 vorgesehen, welcher die Deckplatte 23 elektrisch von dem zweiten Kollektor 9 isoliert. Der zweite Anschlussisolator 47 weist eine zweite Isolatoröffnung 57 auf, welche der zweite Anschlussbolzen 62 durchgreift.

Ein erster Dichtring 51 ist zwischen dem ersten Anschlussbolzen 61 und der Deckplatte 23 angeordnet. Der erste Dichtring 51 ist dabei um den ersten Anschlussbolzen 61 herum gelegt und befindet sich in der ersten Decköffnung 24 der Deckplatte 23. Der erste Dichtring 51 isoliert den ersten Anschlussbolzen 61 elektrisch von der Deckplatte 23. Zusätzlich dichtet der erste Dichtring 51 die erste Decköffnung 24 luftdicht und flüssigkeitsdicht ab. Somit ist insbesondere ein Eindringen von Feuchtigkeit durch die erste Decköffnung 24 in das Zellengehäuse 3 hinein, sowie ein Austreten von Elektrolyt durch die erste Decköffnung 24 aus dem Zellengehäuse 3 heraus verhindert.

Ein zweiter Dichtring 52 ist zwischen dem zweiten Anschlussbolzen 62 und der Deckplatte 23 angeordnet. Der zweite Dichtring 52 ist dabei um den zweiten Anschlussbolzen 62 herum gelegt und befindet sich in der zweiten Decköffnung 25 der Deckplatte 23. Der zweite Dichtring 52 isoliert den zweiten Anschlussbolzen 62 elektrisch von der Deckplatte 23. Zusätzlich dichtet der zweite Dichtring 52 die zweite Decköffnung 25 luftdicht und flüssigkeitsdicht ab. Somit ist insbesondere ein Eindringen von Feuchtigkeit durch die zweite Decköffnung 25 in das Zellengehäuse 3 hinein, sowie ein Austreten von Elektrolyt durch die zweite Decköffnung 25 aus dem Zellengehäuse 3 heraus verhindert.

Die Deckplatte 23 des Zellengehäuses 3 umfasst ferner eine Berstöffnung 33, welche von einer Berstscheibe 34 verschlossen ist. Im Falle eines Überdrucks innerhalb des Zellengehäuses 3 öffnet die Berstscheibe 34, wodurch der Überdruck durch die Berstöffnung 33 nach außen entweichen kann. Dadurch wird ein Bersten des Zellengehäuses 3 verhindert. Die Berstöffnung 33 in der Deckplatte 23 fluchtet dabei mit der zweiten Folienöffnung 38 in der Deckenplattenisolierfolie 36.

Die Batteriezelle 2 weist vorliegend auch eine Überladungsschutzvorrichtung (overcharge safety device, OSD) auf. Die Überladungsschutzvorrichtung umfasst eine in der Deckplatte 23 des Zellengehäuses 3 vorgesehene OSD-Öffnung 29, welche von einer OSD-Membran 28 verschlossen ist. Die OSD-Membran 28 ist als dünne Metallfolie ausgeführt. Im Falle eines Überdrucks innerhalb des Zellengehäuses 3, welcher beispielsweise durch einen Temperaturanstieg infolge einer Überladung der Batteriezelle 2 eintreten kann, verformt sich die OSD-Membran 28 und berührt dabei die Verbindungsplatte 32. Der Abstandsisolator 40 weist dazu eine Kurzschlussöffnung 42 auf, welche die OSD-Membran 28 bei einer Verformung durchgreifen kann. Dadurch entsteht ein Kurzschluss zwischen dem Zellengehäuse 3 und dem zweiten Kollektor 9, wodurch ein Ladevorgang der Batteriezelle 2 unterbrochen wird.

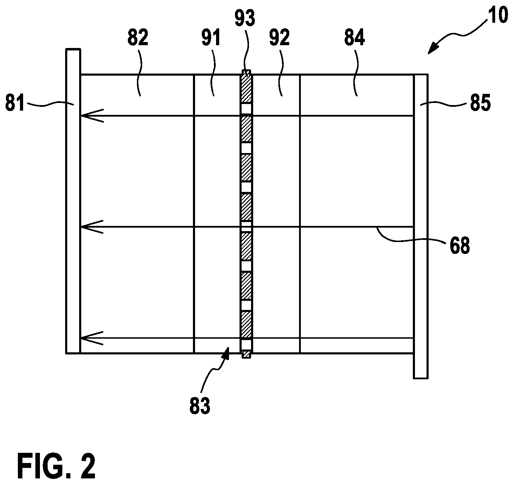

In Figur 2 ist die Elektrodeneinheit 10 der Batteriezelle 2 aus Figur 1 schematisch dargestellt. Die Elektrodeneinheit 10 ist dabei vorliegend als Elektrodenwickel ausgeführt. Die Anode 82 und die Kathode 84 sind jeweils folienartig ausgeführt und unter Zwischenlage eines Separators 83 zu dem Elektrodenwickel gewickelt. Aber auch andere Ausführungen der Elektrodeneinheit 10, beispielsweise als Elektrodenstapel, sind denkbar.

Die Anode 82 umfasst ein anodisches Aktivmaterial, welches folienartig ausgeführt ist. Das anodische Aktivmaterial weist als Grundstoff Silizium oder eine Silizium enthaltende Legierung auf. Der Stromableiter 81 der Anode 82 ist elektrisch leitfähig ausgeführt und aus einem Metall gefertigt, beispielsweise aus Kupfer. Das anodische Aktivmaterial und der Stromableiter 81 sind flächig aneinander gelegt und miteinander verbunden.

Die Kathode 84 umfasst ein kathodisches Aktivmaterial, welches folienartig ausgeführt ist. Das kathodische Aktivmaterial weist als Grundstoff ein Metalloxid auf, beispielsweise Lithium-Kobalt-Oxid (LiCoO₂). Der Stromableiter 85 der Kathode 84 ist elektrisch leitfähig ausgeführt und aus einem Metall gefertigt, beispielsweise aus Aluminium. Das kathodische Aktivmaterial und der Stromableiter 85 sind flächig aneinander gelegt und miteinander verbunden.

Der Separator 83 ist zwischen den anodischen Aktivmaterial und dem kathodischen Aktivmaterial angeordnet. Das anodischen Aktivmaterial befindet sich somit zwischen dem Separator 83 und dem Stromableiter 81 der Anode 82, und das kathodischen Aktivmaterial befindet sich zwischen dem Separator 83 und dem Stromableiter 85 der Kathode 84.

Der Separator 83 ist ebenfalls folienartig ausgebildet und ionisch durchlässig, also von Lithiumionen durchdringbar. Der Separator 83 ist mehrlagig, vorliegend dreilagig, aufgebaut. Der Separator 83 umfasst eine elektrisch leitfähige Kernschicht 93, welche zwischen einer ersten ionisch durchlässigen Randschicht 91 und einer zweiten ionisch durchlässigen Randschicht 92 eingebettet ist.

In hier dargestellten Zustand ist die Batteriezelle 2 geladen. Der Stromableiter 85 der Kathode 84 liegt auf einem elektrisch höheren Potential als der Stromableiter 81 der Anode 82. Dadurch entsteht ein elektrisches Feld 68 zwischen dem Stromableiter 85 der Kathode 84 und dem Stromableiter 81 der Anode 82.

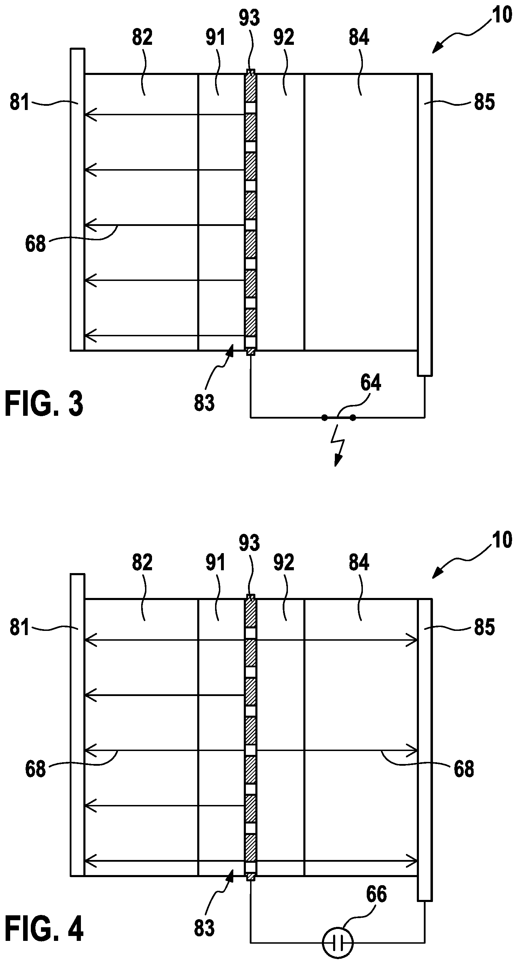

In Figur 3 ist die Elektrodeneinheit 10 aus Figur 2 mit einer ersten Beschaltung in Form einer elektrischen Verbindung zur Steuerung des lonenflusses schematisch dargestellt. Die elektrisch leitfähige Kernschicht 93 des Separators 83 und der Stromableiter 85 der Kathode 84 sind dabei kurzgeschlossen, was durch einen geschlossenen Schalter 64 in Verbindung mit einem Blitzsymbol in Figur 3 dargestellt ist.

Der Stromableiter 85 der Kathode 84 und die Kernschicht 93 des Separators 83 liegen elektrisch auf dem gleichen Potential, und der Stromableiter 81 der Anode 82 liegt elektrisch auf einem tieferen Potential. Somit existiert ein elektrisches Feld 68 zwischen der Kernschicht 93 des Separators 83 und dem Stromableiter

81 der Anode 82. Es existiert aber kein elektrisches Feld zwischen dem Stromableiter 85 der Kathode 84 und der Kernschicht 93 des Separators 83. Dadurch ist kein lonenfluss zwischen dem Separator 83 und der Kathode 84 möglich, und damit ist auch kein lonenfluss zwischen der Anode 82 und dem Separator 83 möglich.

Es ist auch denkbar, die elektrisch leitfähige Kernschicht 93 des Separators 83 und den Stromableiter 81 der Anode 82 kurzzuschließen. In diesem Fall liegen der Stromableiter 81 der Anode 82 und die Kernschicht 93 des Separators 83 elektrisch auf dem gleichen Potential, und der Stromableiter 85 der Kathode 84 liegt elektrisch auf einem höheren Potential. Somit existiert ein elektrisches Feld 68 zwischen dem Stromableiter 85 der Kathode 84 und der Kernschicht 93 des Separators 83. Es existiert aber kein elektrisches Feld zwischen der Kernschicht 93 des Separators 83 und dem Stromableiter 81 der Anode 82. Dadurch ist kein lonenfluss zwischen der Anode 82 und dem Separator 83 möglich, und damit ist auch kein lonenfluss zwischen dem Separator 83 und der Kathode 84 möglich.

In Figur 4 ist die Elektrodeneinheit 10 aus Figur 2 mit einer zweiten Beschaltung in Form einer elektrischen Verbindung zur Steuerung des Ionenflusses schematisch dargestellt. Dabei ist zwischen die elektrisch leitfähigen Kernschicht 93 des Separators 83 und den Stromableiter 85 der Kathode 84 eine Spannungsquelle 66 in Form einer Gleichspannungsquelle geschaltet. Der Pluspol der Spannungsquelle 66 ist dabei mit der Kernschicht 93 des Separators 83 verbunden, und der Minuspol der Spannungsquelle 66 ist mit dem Stromableiter 85 der Kathode 84 verbunden.

Die Kernschicht 93 des Separators 83 liegt somit elektrisch auf höherem Potential als der Stromableiter 85 der Kathode 84 und als der Stromableiter 81 der Anode 82. Somit existiert ein elektrisches Feld 68 zwischen der Kernschicht 93 des Separators 83 und dem Stromableiter 85 der Kathode 84, und es existiert ein elektrisches Feld 68 zwischen der Kernschicht 93 des Separators 83 und dem Stromableiter 81 der Anode 82. Dadurch ist kein lonenfluss zwischen der Anode 82 und der Kathode 84 möglich.

Es ist auch möglich zwischen die elektrisch leitfähigen Kernschicht 93 des Separators 83 und den Stromableiter 81 der Anode 82 eine Spannungsquelle 66 in Form einer Gleichspannungsquelle zu schalten. Der Minuspol der Spannungsquelle 66 ist dabei mit der Kernschicht 93 des Separators 83 verbunden, und der Pluspol der Spannungsquelle 66 ist mit dem Stromableiter 81 der Anode 82 verbunden. Die Kernschicht 93 des Separators 83 liegt somit elektrisch auf tieferem Potential als der Stromableiter 85 der Kathode 84 und als der Stromableiter 81 der Anode 82. Somit existiert ein elektrisches Feld 68 zwischen dem Stromableiter 85 der Kathode 84 und der Kernschicht 93 des Separators 83, und es existiert ein elektrisches Feld 68 zwischen dem Stromableiter 81 der Anode 82 und der Kernschicht 93 des Separators 83. Auch dadurch ist kein lonenfluss zwischen der Anode 82 und der Kathode 84 möglich.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Batteriezelle (2), umfassend mindestens eine Elektrodeneinheit (10) mit einer Anode (82), einer Kathode (84) und einem zwischen der Anode (82) und der Kathode (84) angeordneten Separator (83), wobei der Separator (83) eine elektrisch leitfähige Kernschicht (93) und mindestens eine ionisch durchlässige Randschicht (91, 92) aufweist, **dadurch gekennzeichnet, dass** die elektrisch leitfähige Kernschicht (93) als geschäumte Metallfolie ausgebildet ist.

2. Batteriezelle (2) nach Anspruch 1, **dadurch gekennzeichnet, dass** die elektrisch leitfähige Kernschicht (93) zwischen einer ersten ionisch durchlässigen Randschicht (91) und einer zweiten ionisch durchlässigen Randschicht (92) eingebettet ist.

3. Verfahren zur Steuerung eines Ionenflusses innerhalb einer Batteriezelle (2) nach einem der vorstehenden Ansprüche, wobei
eine elektrische Verbindung zwischen der elektrisch leitfähigen Kernschicht (93) des Separators (83) und
einem Stromableiter (81) der Anode (82) oder
einem Stromableiter (85) der Kathode (84) hergestellt wird.

4. Verfahren nach Anspruch 3, **dadurch gekennzeichnet, dass**
die elektrisch leitfähige Kernschicht (93) und
der Stromableiter (85) der Kathode (84) kurzgeschlossen werden.

5. Verfahren nach Anspruch 3, **dadurch gekennzeichnet, dass**
die elektrisch leitfähige Kernschicht (93) und
der Stromableiter (81) der Anode (82) kurzgeschlossen werden.

6. Verfahren nach Anspruch 3, **dadurch gekennzeichnet, dass** zwischen
die elektrisch leitfähige Kernschicht (93) und
den Stromableiter (85) der Kathode (84)
eine Spannungsquelle (66) geschaltet wird.

7. Verfahren nach Anspruch 3, **dadurch gekennzeichnet, dass** zwischen
die elektrisch leitfähige Kernschicht (93) und
den Stromableiter (81) der Anode (82)
eine Spannungsquelle (66) geschaltet wird.

8. Verwendung einer Batteriezelle (2) nach einem der Ansprüche 1 oder 2 und/oder des Verfahrens nach einem der Ansprüche 3 bis 7 in einem Elektrofahrzeug (EV), in einem Hybridfahrzeug (HEV), in einem Plug-In-Hybridfahrzeug (PHEV), in einer stationären Batterie, in einem Luftfahrzeug oder in einer Batterie in einer marinen Anwendung.

## Claims

1. Battery cell (2) comprising at least one electrode unit (10) having an anode (82), a cathode (84) and a separator (83) which is arranged between the anode (82) and the cathode (84), wherein the separator (83) has an electrically conductive core layer (93) and at least one ionically permeable edge layer (91, 92), **characterized in that** the electrically conductive core layer (93) is in the form of a foamed metal foil.

2. Battery cell (2) according to Claim 1, **characterized in that** the electrically conductive core layer (93) is embedded between a first ionically permeable edge layer (91) and a second ionically permeable edge layer (92).

3. Method for controlling ion flow within a battery cell (2) according to either of the preceding claims, wherein an electrical connection is established between the electrically conductive core layer (93) of the separator (83) and a current collector (81) of the anode (82) or a current collector (85) of the cathode (84) .

4. Method according to Claim 3, **characterized in that** the electrically conductive core layer (93) and the current collector (85) of the cathode (84) are shortcircuited.

5. Method according to Claim 3, **characterized in that** the electrically conductive core layer (93) and the current collector (81) of the anode (82) are shortcircuited.

6. Method according to Claim 3, **characterized in that** a voltage source (66) is connected between the electrically conductive core layer (93) and the current collector (85) of the cathode (84).

7. Method according to Claim 3, **characterized in that** a voltage source (66) is connected between the electrically conductive core layer (93) and the current collector (81) of the anode (82).

8. Use of a battery cell (2) according to either of Claims 1 and 2 and/or of the method according to one of Claims 3 to 7 in an electric vehicle (EV), in a hybrid vehicle (HEV), in a plug-in hybrid vehicle (PHEV), in a stationary battery, in an aircraft or in a battery in a marine application.

## Revendications

1. Cellule de batterie (2), comprenant au moins une unité d'électrode (10) dotée d'une anode (82), d'une cathode (84) et d'un séparateur (83) disposé entre l'anode (82) et la cathode (84), le séparateur (83) possédant une couche centrale (93) électriquement conductrice et au moins une couche de bordure (91, 92) perméable aux ions, **caractérisée en ce que** la couche centrale (93) électriquement conductrice est réalisée sous la forme d'un film métallique expansé.

2. Cellule de batterie (2) selon la revendication 1, **caractérisée en ce que** la couche centrale (93) électriquement conductrice est enrobée entre une première couche de bordure (91) perméable aux ions et une deuxième couche de bordure (92) perméable aux ions.

3. Procédé de commande d'un flux d'ions à l'intérieur d'une cellule de batterie (2) selon l'une des revendications précédentes, une liaison électrique étant établie entre la couche centrale (93) électriquement conductrice du séparateur (83) et un dérivateur de courant (81) de l'anode (82) ou un dérivateur de courant (85) de la cathode (84).

4. Procédé selon la revendication 3, **caractérisé en ce que** la couche centrale (93) électriquement conductrice et le dérivateur de courant (85) de la cathode (84) sont mis en court-circuit.

5. Procédé selon la revendication 3, **caractérisé en ce que** la couche centrale (93) électriquement conductrice et le dérivateur de courant (81) de l'anode (82) sont mis en court-circuit.

6. Procédé selon la revendication 3, **caractérisé en ce qu'**une source de tension (66) est branchée entre la couche centrale (93) électriquement conductrice et le dérivateur de courant (85) de la cathode (84).

7. Procédé selon la revendication 3, **caractérisé en ce qu'**une source de tension (66) est branchée entre la couche centrale (93) électriquement conductrice et le dérivateur de courant (81) de l'anode (82).

8. Utilisation d'une cellule de batterie (2) selon l'une des revendications 1 ou 2 et/ou du procédé selon l'une des revendications 3 à 7 dans un véhicule électrique (EV), dans un véhicule hybride (HEV), dans un véhicule hybride rechargeable (PHEV), dans une batterie fixe, dans un aéronef ou dans une batterie dans une application maritime.
